# EUROPÄISCHE PATENTSCHRIFT

(11) **EP 3 085 481 B1**
(45) Veröffentlichungstag und Bekanntmachung des Hinweises auf die Patenterteilung: **09.10.2019**
(21) Anmeldenummer: 16000490.9
(22) Anmeldetag: 01.03.2016
(51) Int. Cl.: B23B 51/08, B23B 51/10

(54) **BOHR-FAS-KOMBI-WERKZEUG**
DRILLING-CHAMFERING COMBINATION TOOL
OUTIL COMBINE DE PERÇAGE ET DE CHANFREINAGE

(30) Priorität: 24.04.2015 DE 102015005250
(43) Veröffentlichungstag der Anmeldung: 26.10.2016
(73) Patentinhaber: HEULE Werkzeug AG, 9436 Balgach (CH)
(72) Erfinder: Studer, Harry, 9436 Balgach (CH)
(74) Vertreter: Riebling, Peter

(56) Entgegenhaltungen:
- CN-B- 1 931 550
- CN-U- 202 317 174
- CN-U- 203 817 469
- DE-A1-102004 054 989
- DE-U1-202014 103 289
- JP-A- H08 141 806

## Beschreibung

Die Erfindung betrifft ein Bohr-Fas-Kombi-Werkzeug nach dem Oberbegriff des Patentanspruches 1. Ein solches Werkzeug ist aus der CN 202 317 174 U bekannt.

Es ist bereits schon ein auf den gleichen Anmelder zurückgehendes Bohr-Fas-Kombi-Werkzeug bekannt geworden, welches sich dadurch auszeichnet, dass in einem zylindrischen Stahlgrundkörper eine Bohrspitze eingeschraubt ist. Die Bohrspitze besteht aus einem herkömmlichen Spiralbohrer, der in an sich bekannter Weise eine schneidende Spitze ausbildet und der an seinem hinteren Teil einen Gewindeansatz trägt, der in eine zugeordnete Aufnahmebohrung an der Vorderseite des Stahlgrundkörpers eingeschraubt ist.

Ein solches bekanntes Bohr-Fas-Kombi-Werkzeug ist demnach zur Anbringung von Sack- und/oder Durchgangsbohrungen in einem Werkstück bestimmt bei denen nach erfolgter Einbringung in die Bohrung eine Fase an mindestens einem

Bohrungsrand der Bohrung angebracht wird. Das bekannte Bohr-Fas-Kombi-Werkzeug besteht aus einer Bohrspitze, die in einem Grundkörper drehfest befestigt ist, wobei in axialer Richtung hinter der Bohrspitze ein Fasmesser angeordnet ist, das in einem Messerfenster quer zur Längsachse des Kombi-Werkzeugs federbelastet verschiebbar gelagert ist.

Bei diesem Stand der Technik war es demnach bekannt, hinter dem Gewindeansatz für die Halterung des Bohrers ein im Stahlgrundkörper eingebrachtes, quer zur Längsachse des Stahlgrundkörpers verlaufendes Messerfenster anzuordnen, in dem ein Fasmesser federbelastet in Querrichtung verschiebbar angeordnet war. Damit konnte zunächst eine Bohrung angefertigt werden und nachfolgend mindestens ein Bohrungsrand im Werkstück angefast werden.

Mit diesem Stand der Technik wurde zunächst in einem Werkstück eine Bohrung angefertigt und nachdem der Bohrer durch das Werkstück hindurch gefahren war, wurde das Kombi-Werkzeug entgegen der Bohrrichtung nach hinten gezogen, um eine Rückwärtsentgratung (Anfasung) des Bohrungsrandes zu ermöglichen.

Ferner war es im Stand der Technik bekannt, das Fasmesser entweder zweiseitig oder zweiseitig schneidend auszubilden, d. h. sowohl die Vorderseite der angefertigten Bohrung als auch die Rückseite konnte mit einer geeigneten schneidenden Fase versehen werden.

Beim Stand der Technik bestand der Nachteil, dass der zylindrische Grundkörper in dem das Entgratwerkzeug (Fasmesser) angeordnet ist, eine vordere Aufnahmebohrung aufweisen musste und der Bohrer auswechselbar mit einem rückwärtigen Gewindeeinsatz in die vordere Aufnahmebohrung des Grundkörpers eingeschraubt war. Es bestand daher in Längsrichtung kein Raum mehr, um das Fas- oder Engratmesser direkt unmittelbar axial an den Bohrer anzuschließen.

Damit bestand der Nachteil, dass eine axiale, ungenutzte Länge (Adaptionslänge) hinter der Bohrwendel und dem Fasmesser entstand, die zu einer ungünstigen Anwendung des Kombinationswerkzeuges führte. Insbesondere bei kleinen Durchmessern, die zu entgraten sind, d. h. mit einem Durchmesser von weniger als 5 mm, war das Werkzeug wegen des unerwünschten, aber technisch notwendigen axialen Abstandes (Adaptionslänge) zwischen Bohrwendel und Fasmesser durchbiegbar und damit instabil. Der axiale Bereich, in dem die vordere Aufnahmebohrung für die Aufnahme des Gewindeansatzes des Bohrers, in Richtung auf das quer verlaufende Messerfenster ausgebildet war, war wegen der nicht nutzbaren axialen Länge (Adaptionslänge) und der dort angebrachten Gewindeaufnahme für den Bohrerschaft nicht geeignet, hohe Drehmomente aufzunehmen.

Im Stand der Technik war es bisher lediglich bekannt, den Grundkörper für das Entgratwerkzeug aus einem (nicht gehärteten) Stahlmaterial zu fertigen, was jedoch mit dem Nachteil verbunden war, dass der Grundkörper selbst nicht diamant-beschichtbar ist und eine geringe Lebensdauer aufweist.

Damit bestand der Nachteil, dass die Späneabfuhr vom querverschiebbar, federbelastet in einem Messerfenster des Grundkörpers angeordnete Entgrat-oder Fasmesser zu einem vorzeitigen Verschleiß im Bereich der Messerfensters und der Drehlagerung des Entgrat- oder Fasmessers führte, weil weder das Messerfenster noch die Drehlagerung des Entgrat- oder Fasmessers aus einem Hartmetall gebildet, noch diamantbeschichtet werden konnte. Die Materialpaarung von einer gehärteten Bohrerspitze, die in einen ungehärteten und nicht beschichtbaren Grundkörper eines Entgrat- oder Fasmessers eingeschraubt war, war demnach ungünstig.

Die Druckschrift DE 1 477 224 A1 zeigt lediglich einen Hartmetallbohrer, der über eine Lötstelle oder eine Schweißnaht mit dem weicheren Werkzeugschaft verbunden sind. Dies soll bei der Erfindung vermieden werden.

Aus der Druckschrift US 2004/0208717 A1 ist ein Bohrer mit im Bohrerschaft integrierten Schneidmessern bekannt. Ein solches Entgratwerkzeug ist nur für sehr große Durchmesser von mehr als 10 mm möglich, weil ein exzentrisch drehender Antrieb für die radial nach außen verschiebbaren Schneidklingen vorgesehen ist, was bei kleinen Durchmessern nicht praktikabel ist. Ein solches Werkzeug kann deshalb nicht auf Durchmesser von unter 5 mm miniaturisiert werden.

Mit der WO 2005/037473 A1 ist ein weiteres Bohr-Fas-Kombi-Werkzeug bekannt geworden, bei dem der Nachteil besteht, dass der Grundkörper einschließlich der Bohrwendel, die zur Abführung von Spänen vorgesehen ist, nicht aus einem Hartmetallmaterial besteht, sondern aus einem üblichen, relativ weichen HSS-Werkzeugstahl, der deshalb nicht in der Lage ist, die entstehenden hohen Drehmomente bei Werkzeug-Durchmessern von weniger als 6 Millimeter aufzunehmen. An der aus dem HSS-Werkzeugstahl bestehenden Bohrwendel sind Schneidplatten aus einem Hartmetallmaterial angelötet oder angeschraubt.

Nachteil dieser Anordnung ist, dass ein aus Werkzeugstahl bestehender Grundkörper, der sich werkstoffeinstückig in die Bohrwendel fortsetzt, nicht zur Miniaturisierung geeignet ist. Würde man ein solches Teil weiter im Durchmesser verkleinern, können die während der Bearbeitung wirkenden hohen Drehmomente nicht mehr übertragen werden, was zu einem Bruch des Bohrerschaftes führt.

Erfahrungen habe gezeigt, dass aus einfachem Werkzeugstahl bestehende Bohrer nur bis zum einen minimalen Durchmesser von 6 mm verkleinerbar sind. Darunter liegende Durchmesser können nicht mehr mit Bohrern aus Werkzeugstahl und Hartmetallschneide verwirklicht werden.

Wenn man eine solche Miniaturisierung mit einem relativ weichen Werkzeugstahl versucht, ist es außerdem notwendig, die Hartmetallschneide an der Spitze der Bohrwendel anzulöten, was mit einem erheblichen Aufwand, mit hohen Fertigungskosten und mit Problemen bei der Standzeit verbunden ist.

Weiterer Nachteil eines Bohr-Fas-Werkzeuges nach der WO 20057037473 A1 ist, dass im Bohrerschaft, mit dem relativ großen Durchmesser, eine raumgreifende Mechanik für den Schwenkantrieb des Entgratmessers angeordnet ist. Dies verbietet eine weitere Miniaturisierung, denn die Verwendung einer Spiralfeder, die um einen Schwenkbolzen geschlungen ist und mit ihrem gegenüberliegenden Ende in einem Haltbolzen aufgenommen ist, der darüber hinaus noch einstellbar ausgebildet ist, führt zu einer raumgreifenden Mechanik.

Die CN 203 817 469 U offenbart ein kombiniertes Werkzeug zum Bohren und Anfasen von Vorder- und Rückseite. Hierbei wird eine Bohrerspitze auf den Bohrerkörper in der Art einer Schnellkupplung aufgeschraubt. Diese beiden Teile sind also nicht einheitlich durchgehend ausgebildet, sondern über eine Gewindeschraubverbindung miteinander verbunden. Eine Miniaturisierung einer solchen Anordnung ist daher nicht möglich, weil das Schraubgewinde der Bohrerspitze im Bohrerkörper keine hohen Drehmomente übertragen kann.

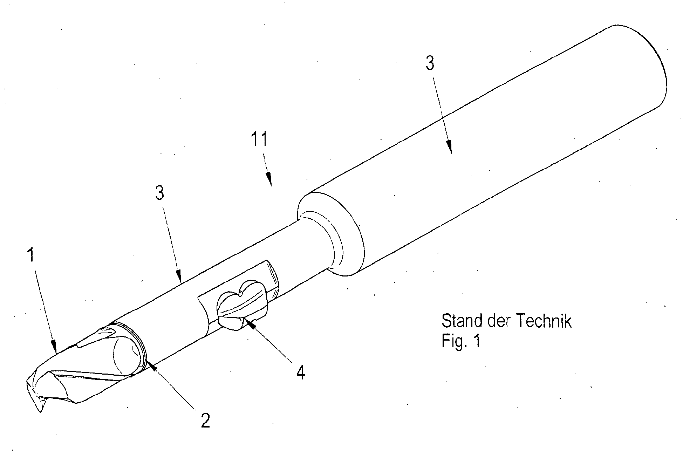

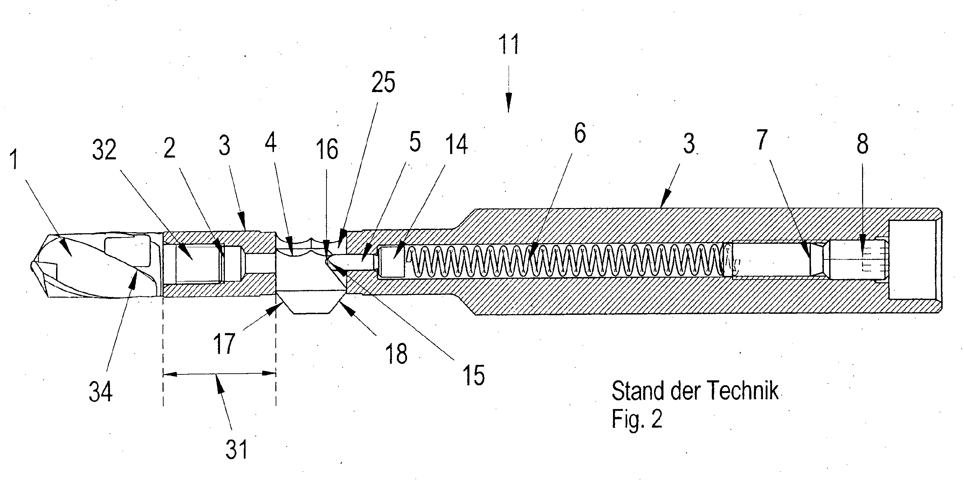

Mit der CN 202 317 174 U wird ein Bohr-Fas-Kombi-Werkzeug zur Bearbeitung von Löchern von Motorzylindern offenbart. Anhand der Figuren 1 und 2 ist zu erkennen, dass Aufspannabschnitt im Bereich des Messerkörpers liegt, der aus einem HSS-Stahl besteht. Wie bekannt, müssen mit einem derartigen Bohr-Fas-Kombi-Werkzeug sehr hohe Drehmomente übertragen werden. Bei der vorliegenden Ausführungsfirm gelingt dies nur deshalb, weil der Schneidkörper gegenüber dem axialen, durchgehenden Schlitz einen wesentlich größeren Durchmesser aufweist, so dass über dieses Material des Schneidkörpers auch hohe Drehmomente übertragen werden können.

Der Erfindung liegt deshalb die Aufgabe zugrunde, ein Bohr-Fas-Kombi-Werkzeug der eingangs genannten Art so weiterzubilden, dass auch bei der Entgratung von kleinen Durchmessern, insbesondere von weniger als 5 mm, eine stabile Führung des Bohrers und des hierzu quer verlaufend arbeitenden Fasmessers möglich ist und dass das gesamte Werkzeug höher belastbar und verschleißfester ist.

Zur Lösung der gestellten Aufgabe ist die Erfindung durch die technische Lehre des Anspruches 1 gekennzeichnet.

Zur Klarstellung der verwendeten Begriffe "Bohrer", "Hartmetall", "Werkzeugstahl", "HSS" wird folgendes erläutert:
1. Ein Bohrer besteht aus Schaft und Kopf. Der Bohrerschaft überträgt das Drehmoment auf den Bohrkopf, führt den Bohrkopf, ermöglicht den Abfluss des Bohrguts und stellt die Zufuhr eines Kühlschmiermittels sicher. Der Bohrkopf übernimmt die Zerspanarbeit.
2. Spiralbohrer haben eine kegelförmige Schneide, üblich ist ein Spitzenwinkel von 118° (HSS-Bohrer) oder 142° (Hartmetallbohrer). Da die Schneidengeometrie auf die Bearbeitung von Metallen ausgelegt ist, wird dieser Typ auch als Metallbohrer bezeichnet.
3. Wendelbohrer bestehen aus Schnellarbeitsstahl (HSS; Hochleistungsschnellschnittstahl), einfache aus Chrom-Vanadium-Stählen (CV-Stahl). Für extreme Anwendungen in zähen Metallen gibt es Bohrer aus Hartmetall.
4. Die Härte und Verschleißfestigkeit dieser Bohrer kann weiter durch verschiedene Beschichtungen z. B. aus Titanaluminiumnitriden (TiAlN → violette Färbung, AlTiN → anthrazit), Titancarbonitrid (TiCN → braunschwarze Färbung) oder Titannitrid (TiN → goldene Färbung) erhöht werden. Beschichtete Bohrer zeichnen sich zudem durch eine hohe Korrosionsbeständigkeit, eine hohe Lebensdauer und deutlich erhöhte Vorschub- und Schnittgeschwindigkeiten aus. Zum Einsatz kommen beschichtete Bohrer meist in der CNC-Bearbeitung.
5. Zur Bearbeitung von gehärtetem Stahl, Manganstahl, Hartguss, faserverstärkten Verbundwerkstoffen oder Beton werden Bohrer mit eingesetzten Hartmetallschneiden oder Vollhartmetallbohrer verwendet. Auch an automatischen Werkzeugmaschinen hat der Vollhartmetallbohrer aufgrund der deutlich höheren Schnittgeschwindigkeit und der besseren Oberflächengüte die HSS-Bohrer weitestgehend verdrängt.
6. Vollhartmetallbohrer lassen sich von den klassischen HSS-Bohrern durch das etwas höhere Gewicht und die dunklere Metallfarbe unterscheiden. Auch haben sie oft einen abgesetzten Schaft, damit die Aufnahmefläche in die Spannzange einer Werkzeugmaschine passt. Entsprechend der Härte des zu bearbeitenden Materials kann ein Vollhartmetallbohrer einen Spitzenwinkel von bis zu 140° haben. Schließlich gibt eine Kennzeichnung wie etwa "K10/F20" Hinweise auf die Art des verwendeten Hartmetalls.

Nach der Erfindung wird deshalb ein Bohr-Fas-Kombi-Werkzeug in der Ausgestaltung eines Metallbohrers als Vollhartmetallbohrer verwendet.

Bei einem nicht erfindungsgemäßen Beispiel zur Erleichterung des Verständnisses der Erfindung ist in einem Grundkörper, der aus einem beliebigen hülsenförmigen Material, wie z. B. einem Metall, einem Kunststoff oder einem anderen Material bestehen kann, ein als Vollhartmetallbohrer ausgebildeter Bohrkörper eingesetzt, dessen vorderes Ende die Bohrspitze bildet und der in seinem direkt an die Bohrspitze angrenzenden Bereich ein quer verlaufendes Messerfenster für das dort eingesetzte Entgrat- oder Fasmesser trägt.

Gegenüber konventionellen Bohr-Fas-Kombi-Werkzeugen ergibt sich der Vorteil, dass der Bohrkörper aus einem integralen und somit werkstoffeinstückigen Vollhartmetallbohrer besteht, dessen vorderes Ende als Bohrspitze ausgebildet ist und dessen hinteres Ende nunmehr aus dem gleichen Material wie die Bohrspitze besteht und dass in diesem Vollhartmetallbohrer nunmehr ein Messerfenster eingesetzt ist, in welches das Entgrat- oder Fasmesser quer verschiebbar angeordnet ist.

Der Bohrschaft besteht aus einem Hartmetall und in diesem Hartmetallmaterial unmittelbar im Anschluss an die Bohrwendel das Messerfenster für den Einsatz eines Entgratmessers angeordnet ist und dass ferner der Schwenkantrieb des Entgratmessers über einen federbelasteten, axialen Stift erfolgt, dessen Achsrichtung im Zentrum des Bohrschafts angeordnet ist. Es wird auf raumgreifende Schenkelfedern verzichtet und stattdessen eine in axialer Richtung ausgerichtete zylindrische Druckfeder verwendet. Nur durch einen solchen klein bauenden Antrieb kann das kombinierte Bohr-Fas-Werkzeug unter Durchmesser von 5 Millimeter verkleinert werden.

Die Bohrspitze bildet, zusammen mit einem daran werkstoffeinstückig ansetzenden Bohrerschaft einen aus Hartmetall bestehenden und/oder hart beschichteten Bohrkörper aus, der eine zentrale durchgehende Innenbohrung aufweist.

Dieses Merkmal zeigt die vorliegende Druckschrift WO 2005/037473 A1 nicht, denn dort besteht der Bohrerschaft aus einem weichen Werkzeugstahl, an dessen vorderen Spitze die aus Hartmetall bestehenden Schneidmesser angelötet oder angeschraubt sind.

Gegenüber der Druckschrift WO 2005/037473 A1 wird nunmehr das Messerfenster mit dem dort quer verschiebbar gelagerten Fasmesser in den Bereich des Hartmetalls oder hart beschichteten Teils verlegt.

Damit ergibt sich der Vorteil, dass in einem einstückigen Vollhartmetallbohrer ein Messerfenster angeordnet ist, in dem das Entgrat-oder Fasmesser federbelastet quer verschiebbar gelagert ist.

Dies ist ein wesentlicher Unterschied gegenüber dem Stand der Technik, denn beim Stand der Technik war eine Material-getrennte, zweiteilige Ausbildung in der Weise, dass ein z. B. aus Hartmetall oder HSS-Material bestehende Bohrspitze in einen sich dahinter anschließenden ungehärteten Stahl-Grundkörper eingeschraubt wurde und der Grundkörper aus einem relativ weichen Material (z.B. Eisen ST37 oder HSS) bestand. Damit war das Messerfenster und die Drehlagerung des Entgrat- oder Fasmessers in dem relativ weichen Metallmaterial des Grundkörpers angeordnet und einem höheren Verschleiß durch ablaufende Späne ausgesetzt.

Zudem führte der unerwünscht große axiale Abstand (Adaptionsabstand) zwischen der Bohrerspitze und dem Entgrat- oder Fasmesser insbesondere bei kleinen Bohrdurchmessern von weniger als 5 mm zu Durchbiegungs- und Torsionsproblemen.

Hiervon weicht die Erfindung ab und sieht nunmehr vor, dass im Bohrerschaft eines Bohrers ein quer verlaufendes Messerfenster eingebaut ist, in dem das Fasmesser eingesetzt ist und federbelastet in Querrichtung zur Längsachse des Bohrerschaftes einstellbar und verstellbar ausgebildet ist.

Die Erfindung sieht demnach einen durchgehenden Bohrerschaft in einem Vollhartmetallbohrer vor, so dass der Bohrerschaft und bevorzugt auch die Bohrerspitze durchgehend einteilig ausgebildet sind und aus dem gleichen gehärteten und/oder hart-beschichteten Metallmaterial bestehen.

Mit der vorliegenden Erfindung besteht deshalb der Vorteil, dass der Bohrschaft, weil er aus einem Hartmetall besteht, weiter miniaturisiert werden kann, weil einerseits im Bohrschaft der besonders raumsparende Schwenkantrieb für das Schneidmesser angeordnet ist und andererseits der Bohrschaft auch bei Miniaturisierung unter 5 mm Durchmesser noch so hohe Drehmomente übertragen kann, dass auch die Anordnung eines Messerfensters in diesem Bohrschaft mit einem darin quer verschiebbaren Fasmesser zu keinem Bruch des Bohrschaftes auch bei Übertragung von hohen Drehmomenten führt.

Erfindungsgemäß besteht der gesamte Bohrer bzw. Bohrkörper, bestehend aus Bohrspitze und werkstoffeinstückig daran ansetzenden Bohrerschaft, aus einem Vollhartmetall-Material. Damit besteht der Vorteil, dass dieses Hartmetallmaterial mit CVD-Partikeln besetzt werden kann, um so eine erhöhte Schneidleistung und eine erhöhte Widerstandskraft zu ermöglichen. Mit dieser technischen Lehre ergibt sich der Vorteil, dass die Bohrspitze nach Verschleiß erneut angeschärft werden kann und dabei nicht das Fasmesser ausgetauscht werden muss, weil ein mehrfaches Anschärfen der Bohrspitze möglich ist.

Weiterer Vorteil ist, dass der gesamte Vollhartmetallbohrer, bestehend aus Bohrspitze und Bohrerschaft, erfindungsgemäß als Bohrkörper ausgebildet ist, der als Einsatzteil ausgebildet ist und der in einer vorderen nach vorne stirnseitig offenen Aufnahmebohrung in einem hülsenförmigen Grundkörper eingesetzt und dort befestigt ist.

Gemäß einiger nicht erfindungsgemäßer Beispiele kann die Befestigung des Vollhartmetallbohrers (bestehend aus Bohrspitze und einstückig damit verbundenen Bohrerschaft) auf verschiedene Weise erfolgen. Beispielsweise kann der Vollhartmetallbohrer in der Aufnahmebohrung eines Grundkörpers eingeschraubt, eingepresst, eingeschrumpft oder mit Hilfe von Querschrauben oder dergleichen Spannmitteln eingespannt werden.

Wichtig ist, dass nunmehr das Messerfenster unmittelbar rückseitig an der spiraligen Bohrwendel ansetzt, so dass die als schädlich angesehene Adaptionslänge zwischen der letzten Wendel der Bohrspitze und der vorderen Kante des Fasmessers entfällt.

Somit ist klargestellt, dass sich das Fasmesser unmittelbar an die Bohrwendel der Bohrspitze anschließt und nur noch ein relativ geringer axialer Zwischenraum einer Adaptionslänge notwendig ist, der z. B. im Bereich von 0,01 bis 2 mm besteht.

Dadurch, dass das Fas-System in der Bohrspitze des Vollhartmetallbohrers integriert ist, d. h. sich ohne wesentlichen Abstand direkt an die letzte Bohrwendel der Bohrspitze anschließt, ergibt sich der Vorteil, dass die vorherige notwendige Adaptionslänge zum Einschrauben eines Gewindeansatzes am Schaft des Bohrers entfällt, und es ergibt sich hiermit eine kurze Wirk-Baulänge für den Einsatz in beengten Bohrräumen.

Gleichzeitig ergeben sich durch die enge zusammengefasste räumliche Anordnung von Fasmesser und Bohrspitze herausragende Eigenschaften hinsichtlich der Vermeidung von Schwingungen, Zentrierfähigkeit, Rundlauf und anderen vorteilhaften Eigenschaften, insbesondere Biegefestigkeit und Drehmomenten-Übertragungs-Stabilität.

Erfindungsgemäß ist vorgesehen, dass der hintere Grundkörper nicht mehr als Hülse ausgebildet ist, der in der Art einer Schrumpf- oder Klebeverbindung den aus Hartmetall bestehenden Schaft des Vollhartmetallbohrers aufnimmt, sondern eine Adapterhülse direkt in den Bohrerschaft eingepresst ist und in der Adapterhülse Antriebsmittel, nämlich eine Druckfeder mit einer geeigneten Einstellschraube angeordnet sind. Die Adapterhülse hat dabei den gleichen oder einen verminderten Durchmesser wie der Bohrerschaft.

Hierbei kann vorgesehen sein, dass der Durchmesser der Adapterhülse z.B. im Bereich zwischen 0,05 und 0,2 Millimeter kleiner ist als der Durchmesser des Bohrerschaftes. Eine solche Dimensionierung verhindert, dass ein eventuell vorhandener Rundlauffehler bei der Verbindung der beiden Teile, sich auf den Gesamtrundlauf des eingespannten Werkzeugs auswirkt, wenn die Spannflächen des Spannfutters über die Länge des Bohrerschaftes hinaus reichen und sich bis in den Bereich der Adapterhülse erstrecken. In diesem Fall wird die Adapterhülse nicht im Spannfutter mit eingespannt, sondern nur der Bohrerschaft. Somit ist der Außendurchmesser der Adapterhülse gegenüber dem Spannfutter freigestellt und beeinflusst die Qualität der Einspannung nicht.

Die Verwendung einer Adapterhülse hat den Vorteil, dass der aus Hartmetall bestehende Bohrerschaft unmittelbar mit der im gleichen oder verminderten Durchmesser angesetzten Adapterhülse in das Spannfutter eines Drehantriebes eingespannt werden kann, was bei herkömmlichen Bohr-Fas-Kombi-Werkzeugen nicht möglich ist, denn bei diesen konnte nur der aus weichem Stahl bestehende Grundkörper in das Spannfutter eingespannt werden.

Bei der erfindungsgemäßen Ausführung ergeben sich somit Vorteile im Hinblick auf die Kraft- und Drehmomenten-Übertragung auf das Spannfutter.

Der Erfindungsgegenstand der vorliegenden Erfindung ist durch die anhängenden Patentansprüche definiert.

Im Folgenden wird die Erfindung anhand von Zeichnungen näher erläutert.

Es zeigen:
- Figur 1:: perspektivische Darstellung eines Bohr-Fas-Kombi-Werkzeuges nach dem Stand der Technik
- Figur 2:: ein Schnitt durch das Bohr-Fas-Kombi-Werkzeug nach dem Stand der Technik
- Figur 3:: eine perspektivische Darstellung eines nicht erfindungsgemäßen Bohr-Fas-Kombi-Werkzeuges
- Figur 4:: ein Schnitt durch die Anordnung nach Figur 3
- Figur 5.: eine perspektivische Ansicht des Fasmessers
- Figur 6:: eine Detaildarstellung des Bohrkörpers nach Figur 3, der in einen Grundkörper eingesetzt ist
- Figur 7:: eine gleiche Darstellung wie Figur 6 mit Darstellung weiterer Einzelheiten während des Bohrvorganges und während des Entgratvorganges
- Figur 8:: eine Ausführungsform eines erfindungsgemäßen Bohr-Fas-Kombi-Werkzeuges

Die Druckschrift WO 2005/037473 A1 entspricht im Prinzip einem Stand der Technik, wie er in den Figuren 1 bis 2 der vorliegenden Anmeldung beschrieben wurde, denn dort ist angegeben, dass das Messerfenster mit dem dort quer verschiebbaren Entgratmesser im weichen Teil des Bohrerschaftes angeordnet ist, was mit den oben beschriebenen Nachteilen verbunden ist.

Deshalb stellt die WO 2005/037473 A1 lediglich eine Variante des Standes der Technik nach den nachstehend beschriebenen Figuren 1 und 2 dar.

Die Figuren 1 und 2 zeigen ein herkömmliches Bohr-Fas-Kombi-Werkzeug nach dem Stand der Technik, wobei in einem Grundkörper 3 eine zentrale Längsbohrung angeordnet ist, in der eine Druckfeder 6 eingesetzt ist. Die Druckfeder 6 wird mit Hilfe eines Distanzstiftes 7 und einer rückwärtig angeordneten Spannschraube 8 nach vorne gedrückt und presst gegen einen zylindrischen Ansatz 14, der bevorzugt werkstoffeinstückig mit einem Steuerbolzen 5 verbunden ist. Der Steuerbolzen 5 greift somit mit seiner vorderen Spitze 15 in eine zugeordnete Steuernut 16 eines Fasmessers 4 ein, das somit federbelastet in Querrichtung in einem Messerfenster 25 quer verschiebbar angeordnet ist.

Im gezeigten Beispiel nach dem Stand der Technik ist das Fasmesser 4 in Vorwärts- und in Rückwärtsrichtung schneidend ausgebildet. Es weist daher eine in Vorwärtsrichtung gerichtete Schneidkante 17 und eine in Rückwärtsrichtung gerichtete Schneidkante 18 auf.

Wichtig ist nun, dass sich jenseits des Messerfensters 25 ein weiterer zylindrischer Ansatz im Grundkörper 3 nach dem Stand der Technik gemäß Figuren 1 und 2 ergibt, weil es notwendig ist, in diesem vorderen Bereich eine Aufnahmebohrung anzuordnen, in die ein Gewindeansatz 32 einer Bohrspitze 1 eingreift. Der Gewindeansatz 32 ist mit einem Aufnahmegewinde 2 versehen, und die Bohrspitze 1 wird somit in den Grundkörper 3 eingeschraubt.

Die Bohrwendel 34 der Bohrspitze 1 endet somit vor der Aufnahmebohrung, in welche der Gewindeansatz 32 eingeschraubt ist. Damit besteht aber der Nachteil, dass eine ungünstige, zu vermeidende Adaptionslänge 31 entsteht, die zwischen dem hinteren Ende der Bohrwendel 34 und dem vorderen Ende des Messerfensters 25 gebildet ist.

Erfindungsgemäß soll diese Adaptionslänge 31 entfallen oder zumindest entscheidend minimiert werden.

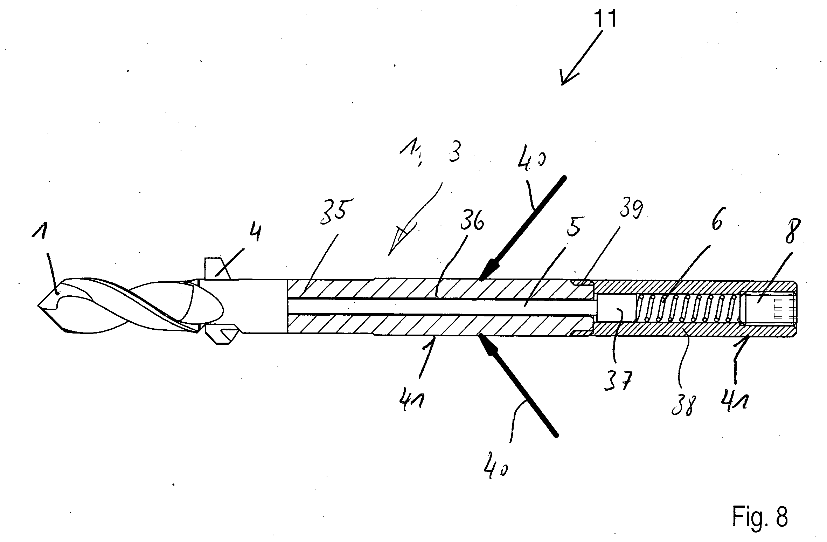

Der hierzu entscheidende Schritt wird anhand eines Bohr-Fas-Kombi-Werkzeuges 11 gezeigt, welches in der Figur 8 näher dargestellt ist.

Erfindungsgemäß ist die Bohrspitze 1 werkstoffeinstückig mit einem Bohrerschaft 35 in der Ausführung eines Vollhartmetallbohrers verbunden ist, sodass damit ein durchgehender Bohrkörper 13 gebildet ist, an dessen vorderen Ende ein Messerfenster 25 angeordnet ist, in welches das Fasmesser 4 verschiebbar gelagert ist.

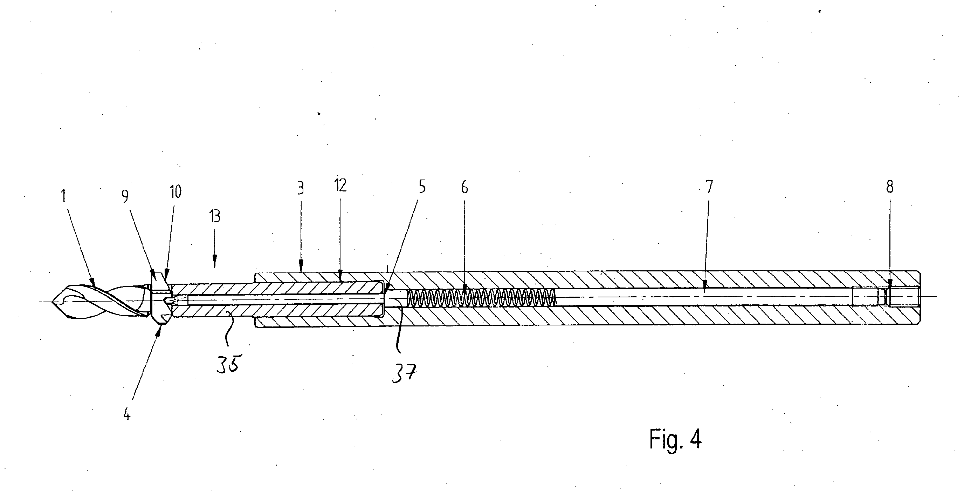

Im Bohrerschaft 35 ist eine zentrale Längsbohrung angeordnet, in welche der Steuerbolzen 5 eingreift, und der Steuerbolzen 5 ist nach hinten durch einen Ansatz bzw. das Kopfteil 37 abgeschlossen und mit diesem verbunden. Bei einem nicht erfindungsgemäßen Beispiel nach Figur 4 greift der Ansatz 14 in einen verkürzt ausgebildeten Grundkörper 3 ein und wird dort von der an sich bekannten Druckfeder 6 federvorbelastet.

Damit wird ein aus einem Vollhartmetall bestehender Bohrer beschrieben, der eine vordere Bohrspitze 1 und einen Bohrerschaft 35 aufweist, wobei im Bereich des Bohrerschaftes 35 das quer verlaufende Messerfenster 25 angeordnet ist, und es entfällt somit die Adaptionslänge 31, weil das Fasmesser nunmehr erfindungsgemäß im Bohrerschaft 35 selbst angeordnet ist.

Damit ist es möglich, die Bohrspitze 1 in den Bohrerschaft 35 aus dem gleichen Material zu bilden, so dass das Messerfenster 25 mit dem dort eingesetzten Fasmesser 4 besonders widerstandsfähig gegen Späneangriff und biegestabil ausgebildet ist.

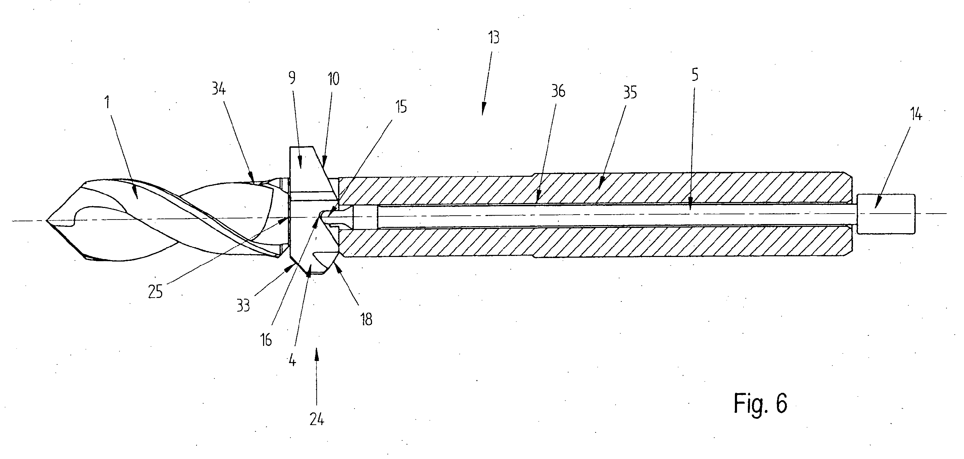

Aufgrund der verkürzten Länge - Wegfall der Adaptionslänge 31 - setzt nun das Messerfenster 25 in axialer Richtung direkt unmittelbar an die Bohrwendel 34 an, wie dies am besten in Figur 6 dargestellt ist.

Ein nicht erfindungsgemäßer Einsatz des gesamten Bohrkörpers 13 in einen hülsenförmigen Grundkörper 3 gemäß Figur 4 erfolgt in einer Aufnahmebohrung 12, und die Befestigung in der Aufnahmebohrung 12 kann in beliebiger Weise erfolgen. Es kann dort der Bohrerschaft 35 des Bohrkörpers 13 eingeschraubt, eingerastet, eingeschrumpft, eingepresst oder dergleichen festgelegt werden, wobei vor allem eine hoch belastbare formschlüssige Verbindung bevorzugt wird.

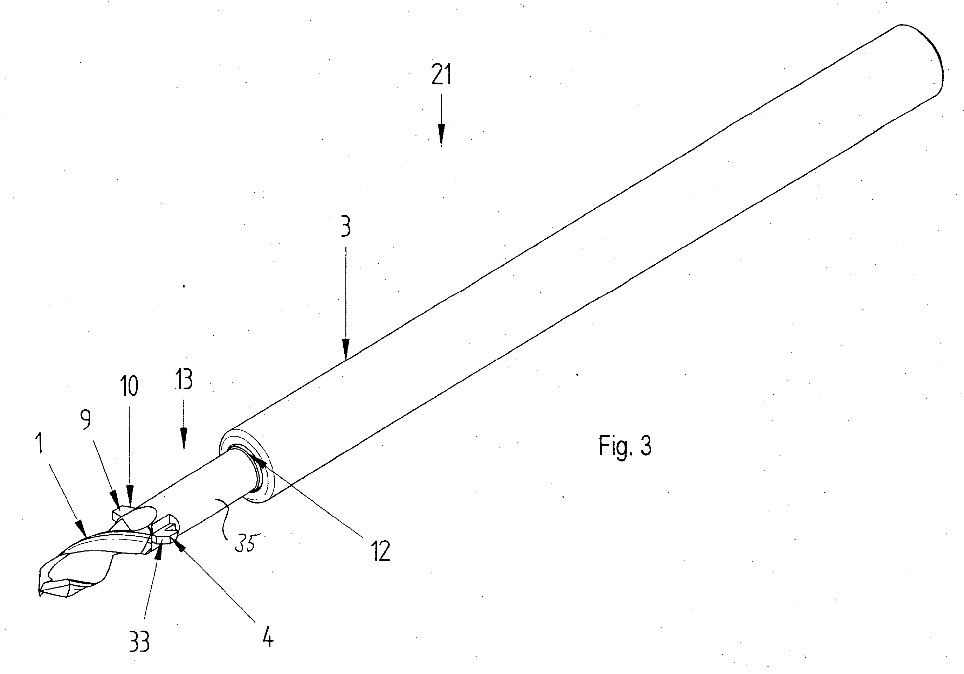

Das Fasmesser kann lediglich einseitig schneidend ausgebildet sein, nämlich mit einer rückwärtigen Schneidkante 18. Die Figuren 3 bis 7 zeigen beispielhaft ein solches einseitig schneidendes Fasmesser 4.

Es kann auch ein beidseitig schneidendes Fasmesser verwendet werden, wie es in der Figur 1 und 2 dargestellt ist. Anstatt der Anordnung einer einzigen, rückwärts wirkenden Schneidkante 18 kann somit auch bei dem nicht erfindungsgemäßen Beispiel nach den Figuren 3 bis 7 eine vorwärts schneidende Schneidkante 17 vorgesehen sein.

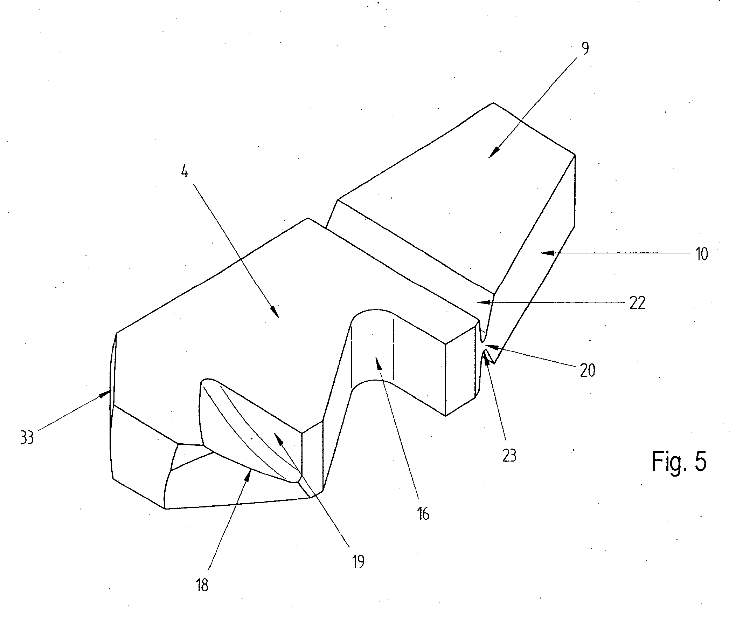

Das dargestellte Fasmesser 4 erlaubt eine einfache Montage, was besonders bei kleinen Durchmessern, die zu entgraten sind, vorteilhaft ist. In Figur 6 ist dargestellt, dass das Fasmesser gemäß Figur 5 ein konisch zulaufendes Einführprofilteil 9 aufweist und das gesamte Fasmesser in Pfeilrichtung 24 in das Messerfenster 25 nach unten gemäß Figur 6 eingesteckt wird und sich die Einführschräge 10 an der federbelastet in das Messerfenster 25 hinein ragenden Spitze 15 des Steuerbolzens 5 abstützt und an dieser Schräge entlang gleitet, und zwar so lange, bis die Spitze 15 in den Bereich der Steuernut 16 des Fasmessers 4 gelangt ist und dort einrastet.

Sobald diese Montagestelle nach Figur 6 erreicht wurde, kann das Einführprofilteil 9 abgebrochen werden. Es dient also gleichzeitig als Handhabe für die Montage des Fasmessers 4.

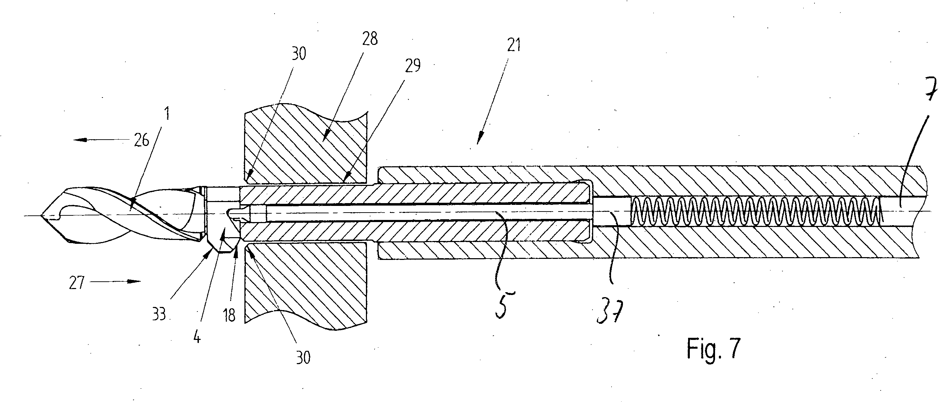

Zu diesem Zweck ist das Einführprofilteil 9 durch zwei einander gegenüberliegende Quernuten 22, 23 in Querrichtung querschnittsgeschwächt ausgebildet und bildet dort einen Bruchsteg 20 aus so dass bei einer Biegung des Einführprofilteils 9 um den Bruchsteg 20 herum der Bruchsteg 20 abbricht und somit das Messer seine endgültige Arbeitsposition gemäß Figur 7 erhält.

Die Figur 5 zeigt auch noch, dass sich an die Schneidkante 18 in an sich bekannter Weise eine Spanleitstufe 19 anschließt.

Die Figur 7 zeigt eine Arbeitsposition eines Bohr-Fas-Kombi-Werkzeuges 21.

Es ist dargestellt, dass der Bohrer mit seiner Bohrspitze 1 bereits schon in einem Werkstück 28 eine Werkstückbohrung 29 angefertigt hat und bereits schon durch diese Werkstückbohrung 29 hindurch gefahren ist. Das Hindurch-Fahren erfolgte in Pfeilrichtung 26.

Danach wird das gesamte Bohr-Fas-Kombi-Werkzeug 21 in Pfeilrichtung 27 zurückgezogen, so dass sich das hintere Ende des Fasmessers 4 mit seiner Schneidkante 18 an den vorderen Bohrungsrand anlegt und dort eine schräge Fase 30 anbringt.

Es ist noch dargestellt, dass an der Vorderseite des Fasmessers 4 eine Einführschräge 33 angeordnet ist, die dafür sorgt, dass wenn der Bohrer mit seiner Bohrspitze 1 in die Werkstück-Bohrung 29 einfährt, das Fasmesser 4 in das Innenprofil des Messerfensters 25 zurückgedrückt wird und keine schneidende Aktion im Bereich der Werkstückbohrung 29 ausübt.

Wichtig ist jedenfalls, dass in dem Bohrer, der aus einem durchgehenden Vollhartmetall besteht, nunmehr das Messerfenster 25 mit dem hier in Querrichtung federbelastet verschiebbaren Fasmesser angeordnet ist.

Auf diese Weise ist es möglich, den Bohrer als integriertes Teil zusammen mit dem Fasmesser herzustellen und dann später in einen hierzu geeigneten, weicheren hülsenförmigen Grundkörper zu verankern.

Die Erfindung sieht auch vor, dass in einem Messerfenster 25 mehrere (mehr als ein) Fasmesser 4 angeordnet sind oder - in einer anderen Variante - dass im axialen Abstand von dem einen Messerfenster 25 noch ein zweites und gegebenenfalls ein drittes Messerfenster angeordnet ist, in dem jeweils ein Fasmesser angeordnet ist. Alle Fasmesser können entweder von dem gemeinsamen Steuerbolzen 5 querverschiebbar im jeweils zugeordneten Messerfenster gelagert und steuerbar sein. In einer anderen Ausgestaltung kann jedem Fasmesser ein eigener, in axialer Richtung federvorgespannter Steuerbolzen 5 zugeordnet sein.

In Figur 6 ist dargestellt, dass der Steuerbolzen 5 federbelastet und axial verschiebbar in der Längsbohrung 36 des Bohrkörpers 13 angeordnet ist.

Die Figur 8 zeigt, dass eine Adapterhülse 38, deren Außendurchmesser 41 dem Außendurchmesser 41 des Bohrerschaftes 35 entspricht, im Bereich einer Verbindung 39 dem hinteren stirnseitigen Ende des Bohrerschaft 35 drehfest verbunden ist.

In der Adapterhülse 38 sind die Antriebsmittel für den Verschiebeantrieb des Steuerbolzens 5 angeordnet. Der Steuerbolzen 5 ist nach hinten durch ein Kopfteil 37 vergrößerten Durchmessers verlängert, wobei das Kopfteil 37 in eine mittige Bohrung der Adapterhülse 38 eingreift. Am Kopfteil 37 stützt sich das eine Ende der Druckfeder 6 ab, deren anderes Ende sich an der Spannschraube 8 abstützt, die in eine Gewindebohrung an der Rückseite der Adapterhülse 38 eingeschraubt ist.

Nachdem der Außendurchmesser 41 des Bohrerschaftes 35 identisch mit dem Außendurchmesser 41 der Adapterhülse 38 ist, besteht nunmehr die Möglichkeit, den aus einem Vollhartmaterial bestehenden Bohrerschaft 35 unmittelbar in das Spannfutter 40 einer Antriebsmaschine einzuspannen. Es entfällt somit der Grundkörper 3 und das Antriebsdrehmoment kann vom Spannfutter 40 direkt auf den Bohrerschaft 35 übertragen werden.

### Zeichnungslegende

- 1: Bohrspitze
- 2: Aufnahmegewinde
- 3: Grundkörper
- 4: Fasmesser
- 5: Steuerbolzen
- 6: Druckfeder
- 7: Distanzstift
- 8: Spannschraube
- 9: Einführprofilteil
- 10: Einfahrschräge
- 11: Bohr-Fas-Kombi-Werkzeug
- 12: Aufnahmebohrung
- 13: Bohrkörper
- 14: Ansatz (von 5)
- 15: Spitze (von 5)
- 16: Steuernut
- 17: Schneidkante (vorwärts)
- 18: Schneidkante (rückwärts)
- 19: Spanleitstufe
- 20: Bruchsteg
- 21: Bohr-Fas-Kombi-Werkzeug
- 22: Quernut (oben)
- 23: Quernut (unten)
- 24: Pfeilrichtung
- 25: Messerfenster
- 26: Pfeilrichtung
- 27: Pfeilrichtung
- 28: Werkstück
- 29: Werkstück-Bohrung
- 30: Fase
- 31: Adaptionslänge
- 32: Gewindeansatz
- 33: Einführschräge
- 34: Bohrwendel
- 35: Bohrerschaft
- 36: Längsbohrung
- 37: Kopfteil
- 38: Adapterhülse
- 39: Verbindung
- 40: Spannfutter
- 41: Außendurchmesser

## Patentansprüche

1. Bohr-Fas-Kombi-Werkzeug (11) zur Anbringung von Bohrungen (29) in einem Werkstück (28) und nachfolgender Anbringung einer Fase (30) am mindestens einen Bohrungsrand der Bohrung (29), bestehend aus einer Bohrspitze (1), die in einem Bohrerschaft (35) drehfest befestigt ist, wobei in axialer Richtung hinter der Bohrspitze (1) mindestens ein Fasmesser (4) angeordnet ist, das in einem im Bohrerschaft (35) angeordneten Messerfenster (25) quer zur Längsachse des Kombi-Werkzeugs (11) federbelastet verschiebbar gelagert ist, wobei ein Bohrkörper (13) bestehend aus der Bohrspitze (1) und dem Bohrerschaft (35) aus einem Metall-Material besteht, und dass in einer zentrischen Längsbohrung (36) des Bohrkörpers (13) ein federbelastet verschiebbarer Steuerbolzen (5) angeordnet ist, dessen vordere Spitze (15) die Querverschiebung des im Messerfenster (25) quer verschiebbaren Fasmessers (4) steuert, **dadurch gekennzeichnet, dass** der Bohrkörper (13) bestehend aus der Bohrspitze (1) und dem Bohrerschaft (35) aus einem Vollhartmetall-Material besteht und dass am rückseitigen Teil des Bohrerschaftes (35) eine Adapterhülse (38) mit gleichem oder vermindertem Durchmesser wie der Bohrerschaft (35) befestigt ist, in der Antriebsmittel für den Steuerbolzen (5) angeordnet sind.

2. Bohr-Fas-Kombi-Werkzeug (11) nach Anspruch 1, **dadurch gekennzeichnet, dass** die Adapterhülse (38) direkt in den Bohrerschaft (35) eingepresst ist und in der Adapterhülse (38) die Antriebsmittel, nämlich eine Druckfeder (6) mit einer geeigneten Einstellschraube angeordnet sind.

3. Bohr-Fas-Kombi-Werkzeug (11) nach einem der Ansprüche 1 oder 2, **dadurch gekennzeichnet, dass** die Adapterhülse (38) den gleichen Durchmesser wie der Bohrerschaft (35) aufweist.

4. Bohr-Fas-Kombi-Werkzeug (11) nach einem der Ansprüche 1 bis 2, **dadurch gekennzeichnet, dass** der Durchmesser der Adapterhülse (38) kleiner ist als der Durchmesser des Bohrerschaftes (35).

5. Bohr-Fas-Kombi-Werkzeug nach einem der Ansprüche 1 bis 4, **dadurch gekennzeichnet, dass** eine Adaptionslänge (31) als axialer Abstand zwischen einem Ende einer Bohrwendel (34) der Bohrspitze (1) und dem Beginn des Messerfensters (25) im Bereich von 0,001 bis 2 mm liegt.

6. Bohr-Fas-Kombi-Werkzeug nach einem der Ansprüche 1 bis 5, **dadurch gekennzeichnet, dass** der Durchmesser der Bohrspitze (1) kleiner oder gleich als 5 mm ist.

7. Bohr-Fas-Kombi-Werkzeug nach einem der Ansprüche 1 bis 6, **dadurch gekennzeichnet, dass** das Fasmesser (4) einseitig schneidend ausgebildet ist.

8. Bohr-Fas-Kombi-Werkzeug nach einem der Ansprüche 1 bis 6, **dadurch gekennzeichnet, dass** das Fasmesser (4) zweiseitig schneidend ausgebildet ist.

9. Bohr-Fas-Kombi-Werkzeug nach einem der Ansprüche 1 bis 8, **dadurch gekennzeichnet, dass** das Fasmesser (4) ein konisch zulaufendes Einführprofilteil (9) aufweist, das abbrechbar ist.

## Claims

1. Combined drill-chamfer tool (11) for the introduction of boreholes (29) in a workpiece (28) and subsequent introduction of a chamfer (30) on at least one borehole edge of the borehole (29), consisting of a drill bit (1), which is attached to be resistant to rotation in a drill shank (35), wherein at least one chamfering blade (4), which is mounted to be displaceable in spring-loaded manner transversely to the longitudinal axis of the combined tool (11) in a blade window (25) arranged in the drill shank (35), is arranged in axial direction behind the drill bit (1), wherein a drill body (13) consisting of the drill bit (1) and the drill shank (35) consists of a metal material, and in that a control bolt (5), which is displaceable in spring-loaded manner, the front tip (15) of which controls the transverse displacement of the chamfering blade (4) which is displaceable transversely in the blade window (25), is arranged in a central longitudinal borehole (36) of the drill body (13), **characterised in that** the drill body (13) consisting of the drill bit (1) and the drill shank (35) consists of a solid carbide material and **in that** on the rear-side part of the drill shank (35) is attached an adapter sleeve (38) with the same or reduced diameter compared to the drill shank (35), in which drive means for the control bolt (5) are arranged.

2. Combined drill-chamfer tool (11) according to claim 1, **characterised in that** the adapter sleeve (38) is pressed directly into the drill shank (35) and the drive means, namely a compression spring (6) with a suitable adjusting screw, are arranged in the adapter sleeve (38).

3. Combined drill-chamfer tool (11) according to one of claims 1 or 2, **characterised in that** the adapter sleeve (38) has the same diameter as the drill shank (35).

4. Combined drill-chamfer tool (11) according to one of claims 1 to 2, **characterised in that** the diameter of the adapter sleeve (38) is smaller than the diameter of the drill shank (35).

5. Combined drill-chamfer tool according to one of claims 1 to 4, **characterised in that** an adaptation length (31) as the axial distance between one end of a drill helix (34) of the drill bit (1) and the start of the blade window (25) lies in the range from 0.001 to 2 mm.

6. Combined drill-chamfer tool according to one of claims 1 to 5, **characterised in that** the diameter of the drill bit (1) is less than or equal to 5 mm.

7. Combined drill-chamfer tool according to one of claims 1 to 6, **characterised in that** the chamfering blade (4) is designed to be cutting on one side.

8. Combined drill-chamfer tool according to one of claims 1 to 6, **characterised in that** the chamfering blade (4) is designed to be cutting on two sides.

9. Combined drill-chamfer tool according to one of claims 1 to 8, **characterised in that** the chamfering blade (4) has a conically tapering lead-in profile part (9) which can be broken off.

## Revendications

1. Outil de perçage et de chanfreinage combinés (11) pour l'application de perçages (29) dans une pièce (28) et l'application successive d'un chanfrein (30) sur au moins un bord de perçage du perçage (29), composé d'une pointe de perçage (1) qui est fixée solidaire en rotation dans une tige de foret (35), dans lequel au moins une lame de chanfreinage (4) est disposée dans la direction axiale derrière la pointe de perçage (1), laquelle lame est logée déplaçable sollicité par ressort dans une fenêtre de lame (25) disposée dans la tige de foret (35) transversalement à l'axe longitudinal de l'outil combiné (11), dans lequel un corps de perçage (13) composé de la pointe de perçage (1) et de la tige de foret (35) est en un matériau métallique, et qu'un boulon de commande (5) déplaçable sollicité par ressort est disposé dans un perçage allongé centré (36) du corps de perçage (13), dont la pointe avant (15) commande le déplacement transversal de la lame de chanfreinage (4) déplaçable transversalement dans la fenêtre de lame (25), **caractérisé en ce que** le corps de perçage (13) composé de la pointe de perçage (1) et de la tige de foret (35) est en un matériau métallique dur et qu'une douille d'adaptateur (38) avec diamètre égal ou inférieur à celui de la tige de foret (35) est fixée à la partie arrière de la tige de foret (35), dans laquelle des moyens d'entraînement pour le boulon de commande (5) sont disposés.

2. Outil de perçage et de chanfreinage combinés (11) selon la revendication 1, **caractérisé en ce que** la douille d'adaptateur (38) est emmanchée directement dans la tige de foret (35) et les moyens d'entraînement, à savoir un ressort de compression (6) avec une vis de réglage adaptée, sont disposés dans la douille d'adaptateur (38).

3. Outil de perçage et de chanfreinage combinés (11) selon l'une des revendications 1 ou 2, **caractérisé en ce que** la douille d'adaptateur (38) présente le même diamètre que la tige de foret (35).

4. Outil de perçage et de chanfreinage combinés (11) selon l'une des revendications 1 à 2, **caractérisé en ce que** le diamètre de la douille d'adaptateur (38) est inférieur au diamètre de la tige de foret (35).

5. Outil de perçage et de chanfreinage combinés selon l'une des revendications 1 à 4, **caractérisé en ce qu'**une longueur d'adaptation (31) se trouve en tant que distance axiale entre une extrémité d'une hélice de forage (34) de la pointe de perçage (1) et le début de la fenêtre de lame (25) dans la plage de 0,001 à 2 mm.

6. Outil de perçage et de chanfreinage combinés selon l'une des revendications 1 à 5, **caractérisé en ce que** le diamètre de la pointe de perçage (1) est inférieur ou égal à 5 mm.

7. Outil de perçage et de chanfreinage combinés selon l'une des revendications 1 à 6, **caractérisé en ce que** la lame de chanfreinage (4) est réalisée coupante d'un côté.

8. Outil de perçage et de chanfreinage combinés selon l'une des revendications 1 à 6, **caractérisé en ce que** la lame de chanfreinage (4) est réalisée coupante des deux côtés.

9. Outil de perçage et de chanfreinage combinés selon l'une des revendications 1 à 8, **caractérisé en ce que** la lame de chanfreinage (4) présente une partie profilée d'introduction conique (9) qui peut être brisée.
